# EUROPEAN PATENT APPLICATION

(11) **EP 0 563 915 A1**
(43) Date of publication of application: **06.10.1993**
(21) Application number: 93105329.2
(22) Date of filing: 31.03.1993
(51) Int. Cl.: A45F 5/02, F16B 2/24, G02B 23/16

(54) **Support element for multifunctional spy-glass**

(30) Priority: 03.04.1992 IT MI920328 U
(71) Applicant: NAVIR snc di NATALI A.& C., I-20142 Milan (IT)
(72) Inventor: Natali, Angelo, I-20143 Milan (IT); Natali, Franco, I-20142 Milan (IT)
(74) Representative: Gervasi, Gemma, Dr.

(57) **Abstract**

A support element is described (made preferably in plastic material) which, after having been applied to a multifunctional spy-glass (4) or to another equivalent article, allows a user to wear the multifunctional spy-glass, while keeping his hands free.

The support element comprises two side-bodies (5,6), joined together by means of a connection element (7) (to which a button-hole (8) or equivalent means are fixed, allowing, for instance, the user to wear the multifunctional spy-glass (7) hanging from his neck or from his belt) and at least a fixing elastic body (1), integral with the connection element (7).

The connection element (7), together with the inside walls (3) of the side-bodies (5,6), delimits a "U"-shaped cavity, suitable to receive, at least partly, the multifunctional spy-glass (4), which is locked to the support by means of a grip pawl (2), situated in the fixing elastic body (1), which fits in a cavity (or in a relief) present on the surface of said spy-glass (4).

## Description

### Field of the invention

The object of the present description consists in a support element (made preferably in plastic material) which, after having been applied to a multifunctional spy-glass or to another equivalent article,allows a user to wear the multifunctional spy-glass, while keeping his hands free.

The support element comprises two side-bodies, joined together by means of a connection element (to which a button-hole or equivalent means are fixed, allowing, for instance, the user to wear the multifunctional spy-glass hanging from his neck or from his belt) and at least a fixing elastic body, integral with the connection element.

The connection element, together with the inside walls of the side bodies, delimits a "U"-shaped cavity suitable to receive, at least partly, the multifunctional spy-glass, which is locked to the support by means of a grip pawl, situated in the fixing elastic body, which fits in a cavity (or in a relief) present on the surface of said spy-glass.

### Prior art

Multifunctional "toy" spy-glasses are known for some time and have a large diffusion (particularly among children and teen-agers); said spy-glasses present a very simple structure, have a reduced weight and encumbrance and consist essentially of a central body, to whose ends two couples of lenses (which can be folded preferably into said body) are fixed, acting as "spy-glass" ; a user can focalize the image by varying the length of the central body, in which moreover there are a compass, a signalling mirror, a very small electric torch and further possible devices.

Multifunctional spy-glass of this type is particularly suitable for young men joining scouting associations or however interested to carry on an activity in the open air in "wild" surroundings, where it is not allowed (or foreseen) to benefit by some "achievements" of the modern civilization, such as, for instance, telephon and/or radio.

Moreover it is always on the increase the number of the persons trying to verify their own capability to move in hostile surroundings by orienting themselves by means of a compass and by communicating by means of flashes of light obtained by means of mirrors or light sources.

The multifunctional spy-glasses, which can be available on the market, although they do not present very remarkable characteristics, are generally suitable to the required use, but they present the drawback to be rather inconvenient to be carried, as it is troublesome to hold them always in the hands, whereas they are encumbering and not very suitable for a frequent use if they are generally kept in the pocket.

The simple and economic, but extremely functional support object of the present invention, allows to avoid the above mentioned drawbacks, as it allows the user to wear the multifunctional spy-glass (which is therefore immediately available even for a frequent use) at the same time letting the hands of the user free.

### Summary of the invention

The object of the present invention consists in a support element for a multifunctional spy-glass comprising two side bodies (joined together by means of a connection element presenting means suitable to allow a user to wear the multifunctional spy-glass) and at least a fixing elastic body integral with aforesaid connection element, which together with the inside walls of the side bodies delimits a "U"-shaped cavity suitable to receive at least the terminal part of the multifunctional spy-glass.

### List of the figures

A support element, carried out according to the invention, will be now described by means of the enclosed figures, where
- figures 1 and 2 show two perspective views of the support element ;
- figure 3 shows the bottom view of the support element ;
- figure 4 shows the front view of the support element ;
- figure 5 shows the side view of the support element ;
- figure 6 shows the top view of the support element ;
- figure 7 shows the side view of a support element comprising two elastic bodies 1.

### Description in detail

In the enclosed figures number 1 indicates a "L"-shaped elastic body, having a grip pawl 2 at the end of an arm of its; number 3 indicates the inside walls, faced each other, of two side-bodies 5 and 6 which are connected by means a cross-piece 7 (consisting of the end of the other arm of elastic body 1) to which a button-hole 8 (or other equivalent means) is fixed, allowing a user to wear (for instance hanging from his neck or from his belt) the support, so as to keep his hands free; inside walls 3 of bodies 5 and 6, together with cross-piece 7, confer a "U"-shape to the support element, which is one of the characteristic elements of the invention.

In the enclosed figures inside walls 3 are parallel to each other, but such walls can be convergent still remaining under the scope of the invention.

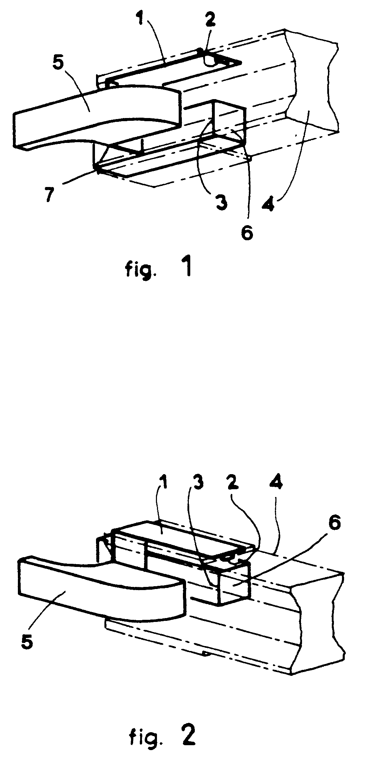

In the perspective views of figures 1 and 2, the support element is applied on the terminal part of a body (preferably a multifunctional spy-glass or another equivalent article) drawn in the figures with a dash and point line: body 4 is fitted in between inside walls 3 (only one of which is visible in figures 1 and 2) of side bodies 5 and 6 forming the arms of the "U" and is locked to the support by means of grip pawl 2 of the elastic body 1, which fits in a cavity (or in a relief) present on the surface of body 4.

Body 4 illustrated in figures 1 and 2 presents a "I"-shaped section, or, however, it presents on two opposite walls at least a groove having such width and depth as to receive at least inside walls 3 of side-bodies 5 and 6, which thereby keep body 4 in the suitable position: therefore the height of the inside walls of side-bodies 5 and 6 must be equal to (or at least not greater than) the width of the grooves present on the walls of body 4. According to another possible embodiment of the invention, which is not illustrated in the figures and is dual of the preceding one, reliefs or mouldings are present on at least two opposite walls of body 4, which fit in corresponding grooves present on inside walls 3 of side-bodies 5 and 6.

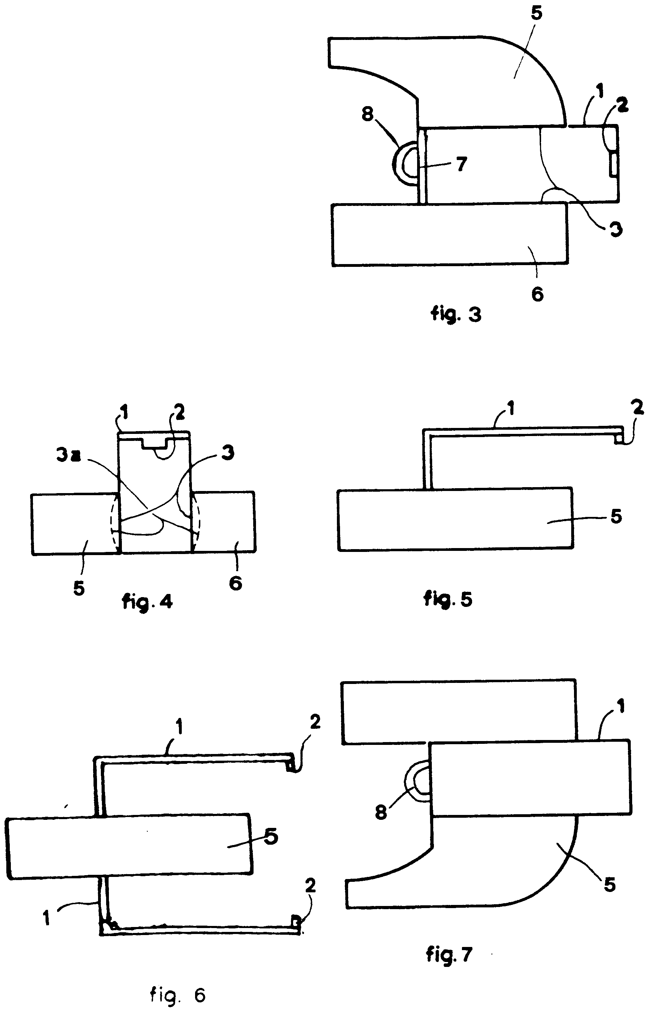

Should the part of body 4 fitted in the support have a circular or anyhow a round section, inside walls 3 of side bodies 5 and 6 have (or can have) a round shape as illustrated by the dashed line in figure 4 (reference 3a); should, on the contrary, the part of body 4 fitted in the support have a quadrangular section without grooves or mouldings in which inside walls 3 of side-bodies 5 and 6 could fit to keep body 4 in a suitable position, the support comprises two elastic bodies 1, being each other opposite, as illustrated in the side-view of figure 7; the ends of two elastic bodies 1, which do not present grip pawls 2, are merged together to form cross-piece 7.

In the enclosed figures, side-bodies 5 and 6 differ from each other in shape and size, as they were planned to receive a whistle, respectively a very small electric torch; however the only important features as far as the present invention is concerned, are height and shape of inside walls 3, whereas the global shape and the other sizes of side-bodies 5 and 6, as well as the nature of the things contained in said side-bodies, are quite unimportant.

The support, according to the invention, can be equipped with further devices (such as, for instance, a sun-clock) set up on the upper part of elastic element 1, that is not in contact with body 4: such further devices can be used alone or together with elements (for instance a compass) present on or in body 4.

A person skilled in the art can make in the support element, object of the present description, all the changes and improvements, suggested by the usual experience and by the usual development of the technique, still remaining under the scope of the invention.

## Claims

1. A support element for a multifunctional spy-glass, characterized in that it comprises two side-bodies (5.6), joined together by means of a connection element (7) placed transversally with respect to said side-bodies (5,6) and presenting means (8) suitable to allow a user to wear said multifunctional spy-glass and at least a fixing elastic body (1), integral with said connection element (7) and in that said connection element (7) together with inside walls (3) of said side-bodies (5,6), delimits a "U"-shaped cavity suitable to hold at least terminal part (4) of said multifunctional spy-glass.

2. A support element, according to claim 1, characterized in that said fixing elastic body (1) is "L"-shaped, and presents at the end of an arm of its a grip-pawl (2)) suitable to fit in said multifunctional spy-glass and in that the end of the other arm of said elastic body (1) is said connection element (7) of said side-bodies (5,6).

3. A support element, according to claim 2, characterized in that said terminal part (4) of said multifunctional spy-glass, fitted in said "U"-shaped cavity, is locked to said support element by means of said grip pawl (2) of said elastic body (1).

4. A support element, according to claim 1, characterized in that it comprises two fixing elastic bodies (1), being each other opposite, in that said fixing elastic bodies (1) are "L"-shaped and present at the end of an arm of theirs a grip pawl (2) suitable to fit in said multifunctional spy-glass and in that the ends of the other arm of said elastic bodies (1), merged together, form said connection element (7) of said side-bodies (5,6).

5. Support element, according to claim 4, characterized in that said terminal part (4) of said multifunctional spy-glass, fitted in said "U"-shaped cavity, is locked to said support element by means of grip pawls (2) of said elastic bodies (1).

6. Support element, according to claim 1, characterized in that said inside walls (3) of said side-bodies (5,6), forming the "U"- arms, are plane.

7. Support element, according to claim 1, characterized in that said inside walls (3a) of said side-bodies (5,6), forming the "U" arms, are round.
